# EUROPÄISCHE PATENTANMELDUNG

(11) **EP 1 308 863 A1**
(43) Veröffentlichungstag der Anmeldung: **07.05.2003**
(21) Anmeldenummer: 01126268.0
(22) Anmeldetag: 06.11.2001
(51) Int. Cl.: G06F 17/60

(54) **Verfahren zur nichtlinearen Bewertung von Dokumenten**

(71) Anmelder: ALSTOM (Switzerland) Ltd, 5401 Baden (CH)
(72) Erfinder: De Paris, Walter, 4310 Rheinfelden (CH); Möller, Uwe, Dr., 5116 Schinznach-Bad (CH); Wernli, Valborg, 5452 Oberrohrdorf (CH)

(57) **Zusammenfassung**

Ein Verfahren zur Dokumentenauswertung basiert darauf, Dokumente, die mit gemäss spezifischer Interessenprofile (a, ... , g) aus der Menge (1) der vorhandenen Dokumente zu herauszufiltern, und diese dokumentenspezifischen Lesern (A, ... , G) zuzuordnen und zeitgleich zur Verfügung zu stellen. Diese dokumentenspezifischen Leser haben die Aufgabe, die Dokumente auszuwerten und eine Relevanzbewertung vorzunehmen. Ein Computersystem (4) koordiniert den Bewertungsprozess mittels einer Koordinationstabelle (5). Aus den einzelnen individuellen Relevanzbewertungen wird eine dokumentenspezifische Gesamtrelevanz gebildet. Dokumente einer bestimmten Relevanz werden einer fachspezifischen Entscheidungsstelle (PRO) zugewiesen. Die fachspezifische Entscheidungsstelle nimmt in einer Ausführungsform der Erfindung eine neuerliche Relevanzbewertung vor. In Abhängigkeit von dieser Bewertung kann die fachspezifische Entscheidungsstelle zusammen mit einer administrativen Entscheidungsstelle (SPO/SPA) differenzierte Folgeprozesse einleiten.

## Beschreibung

### Technisches Gebiet

Die vorliegende Erfindung betrifft ein Verfahren zur nichtlinearen Dokumentenauswertung gemäss dem Oberbegriff des Anspruchs 1. Sie betrifft weiterhin ein Computerprogramm oder Computerprogrammsystem, welches einen Computer zum Ablauf der Steuerung eines solchen Verfahrens veranlasst, sowie Datenträger, auf welchen dieses Computerprogramm oder Programmsystem gespeichert ist.

### Stand der Technik

Der Umfang der Bereitstellung von in Wirtschaft, Technik und Wissenschaft verwertbarer Information ist in den letzten Jahrzehnten immens gestiegen und steigt weiter steil an. Die vorhandene Information ist in einer Unzahl täglich veröffentlichter Dokumente enthalten, wobei unter Dokumenten nicht nur klassische Printmedien zu verstehen sind, sondern im weiteren Sinne auch Radio- und Fernsehmeldungen, und in exponentiell zunehmendem Masse natürlich auch auf dem Internet veröffentlichte Seiten, wobei diese Aufzählung selbstverständlich nicht abschliessend zu verstehen ist. Die Auswertung eines Dokumentes ist ein nichtlinearer Prozess, bei dem ein Fachmann den Informationsgehalt eines Dokumentes vor dem Hintergrund seines spezifischen Wissens und durchaus auch unter subjektiven Gesichtspunkten analysiert und gegebenenfalls aufbereitet. Die frühzeitige Auswertung, Aufbereitung und Nutzung dieser Informationsfülle und die daraus resultierende Fähigkeit, rechtzeitig infolge bekanntgewordener Sachverhalte gezielt Massnahmen zu ergreifen, bedeutet für Unternehmen und Organisationen einen beachtlichen Wettbewerbsvorteil in technischer wie wirtschaftlicher Hinsicht.

Ein Beispiel, bei dem sich dies besondersdeulich wird, ist die Beobachtung der Patentliteratur. Patentschriften müssen einerseits in inhaltlicher Hinsicht analysiert werden, und deren Relevanz für die eigene Entwicklungstätigkeit muss erfasst werden. Dies ist wichtig, um beispielsweise die eigene Entwicklungstätigkeit nicht in ein patentrechtlich abgedecktes Gebiet laufen zu lassen, andererseits können auch Doppelentwicklungen vermieden werden. Die gründliche inhaltliche Beurteilung erfordert die Dokumentenlese durch einen Leserkreis aus unterschiedlichen fachlichen Disziplinen, damit der Inhalt eines Patentdokumentes aus unterschiedlichen Blickwinkeln durchleuchtet wird. Die Gesamtrelevanz eines Dokumentes ergibt sich als Vereinigungsmenge der Beurteilung aller in den Beurteilungsprozess involvierten Leser. Der beschriebene Prozess ist aber auch zeitkritisch, da gegebenenfalls Fristen eingehalten werden müssen.

Eine klassische Methode zur Dokumentenlese beruht darauf, jedes durch ein Interessenprofil, welches beispielsweise auf der IPC-Einordnung beruht, erfasstes Dokument bei einem dokumentenspezifischen Leserkreis in gedruckter Form in den Umlauf zu geben, wobei die Zuordnung der Dokumente zu einem Leserkreis ebenfalls auf vordefinierten Kriterien beruht, und als Teilmenge des Interessenprofils verstanden werden kann. In einer bewährten Variante werden die Relevanzbewertungen der einzelnen dokumentenspezifischen Leser auf einer zum umlaufenden Dokument selbst gehörenden Liste erfasst, dergestalt, dass nach Beendigung des Umlaufs die Vereinigungsmenge aller Bewertungen zusammengefasst vorliegt. Aus der höchsten Relevanz ergibt sich eine dokumentenspezifische Relevanz. Als hochrelevant bewertete Dokumente werden in einem nächsten Schritt einer fachspezifischen Entscheidungsstelle zugeführt, welche ein weiteres Vorgehen einleitet. Andere, als weniger relevant eingestufte, Dokumente werden archiviert, während die als nicht relevant eingestuften Dokumente dem Recycling zugeführt werden.

Das beschriebene Verfahren ist, sofern die notwendige Organisation zur Verfügung steht, zunächst einmal einfach zu handhaben, und hat sich in der Praxis erst noch als effizient im Hinblick auf eine realistische Relevanzbewertung der Dokumente erwiesen.

Gleichwohl hat das beschriebene Verfahren auch Nachteile. Zum einen wird eine Vielzahl von Patentdokumenten als Volltext an die dokumentenspezifischen Leser verteilt. Die Erfahrung zeigt, dass mehr als die Hälfte dieser Dokumente bereits nach Analyse der Zusammenfassung und der relevanten Figur von allen Lesern als uninteressant eingestuft werden. Eine weitere Einschränkung der - linearisierten - Vorauswahl, die beispielsweise über IPC-Einordnungen oder Schlagwortkombinationen vorgenommen wird, birgt aber ein hohes Risiko, dass eine signifikante Anzahl hochrelevanter Dokumente nicht durch die nichtlineare Analyse durch die Leser erfasst wird.

Ein weiterer Nachteil ist darin zu sehen, dass die Lese der Dokumente bei den einzelnen Lesern seriell erfolgt, will sagen, es kann nur ein Leser zur Zeit an einem Dokument arbeiten. Gerade dann aber, wenn sich ein Dokument als potentiell relevant herauskristallisiert, was ja an sich einen höheren Aufwand zur Analyse eines Dokumentes erfordert und rechtfertigt, greifen strenge Fristen, so, dass dem einzelnen Leser nur eine sehr begrenzte Zeit zur Verfügung steht. Daneben ist auch der fristgerechte Rücklauf der Dokumente zu einer erforderlichen Koordinationsstelle nur schwer zu überwachen.

### Darstellung der Erfindung

Aufgabe der vorliegenden Erfindung ist es, ein Verfahren der eingangs genannten Art anzugeben, welches die oben genannten Nachteile vermeidet.

Diese Aufgabe wird erfindungsgemäss durch die Gesamtheit der Merkmale des Anspruchs 1 gelöst.

Kern der Erfindung ist es also, die Dokumente allen dokumentenspezifischen Lesern zeitgleich zur Verfügung zu stellen. In einer bevorzugten Ausführungsform erhalten zeitgleich allen dokumentenspezifischen Leser das Dokument zunächst in einer niedrigen Detailstufe, beispielsweise in Form einer Zusammenfassung, welche gegebenenfalls noch durch ein oder mehrere Zeichnungen ergänzt ist. Wenn ein Leser anhand der Information der niedrigsten Detailstufe ein Dokument als potentiell relevant oder jedenfalls als nicht irrelevant einstuft, wird auf Anforderung eine höhere Detailstufe des Dokumentes, bis hin zum Gesamtdokument, zur Verfügung gestellt. Die parallele, zeitgleiche Dokumentenlese wird mit Hilfe einer Koordinationstabelle nachvollzogen. In der Koordinationstabelle wird idealerweise vermerkt, welches Dokument welchem Leser wann zur Verfügung gestellt wurde. Weiterhin erfolgen entsprechende Einträge, wenn ein Leser ein Dokument gelesen und bewertet hat, dergestalt, dass ein Dokument als ausgewertet vermerkt wird, wenn es von allen dokumentenspezifischen Lesern gelesen und bewertet wurde. Bedarfsweise kann eine Zeitlimite gesetzt und anhand der entsprechenden Einträge in der Koordinationstabelle überprüft werden, bis wann ein Dokument von allen dokumentenspezifischen Lesern gelesen und beurteilt sein sollte; einem Leser kann dann in einer festzusetzenden Zeitspanne vor erreichen der Zeitlimite eine Erinnerung geschickt werden. Ebenso kann in der Koordinationstabelle festgehalten werden, ob eine Kopie eines angeforderten Volltextdokumentes bereits vorliegt, oder ob diese zunächst noch extern beschafft werden muss.

Insgesamt kommt der Koordinationstabelle bei der Umsetzung eines erfindungsgemässen Verfahrens eine zentrale Rolle zu. Die technische Lösung der gestellten Aufgabe kann insbesondere darin gesehen werden, dass eine Koordinationstabelle, vorzugsweise auf einem von allen Lesern zugänglichen Computersystem, geführt wird, was es ermöglicht, eine parallele Dokumentenlese zu implementieren und zu überblicken. In der Koordinationstabelle kann eine durch die Leser vorzunehmende Relevanzbewertung der Dokumente erfasst werden, wobei die höchste Relevanz, die ein einzelner Leser einem Dokument zuordnet, die dokumentenspezifische Relevanz bildet. Vorteilhaft ist es hierbei, wenn die Relevanzbewertung in einem Raster vordefinierter Relevanzstufen vorgenommen wird.

In einer Variante des erfindungsgemässen Verfahrens löst eine Relevanzbewertung ab einer bestimmten Relevanzstufe einen neuen Prozess aus. Das Dokument kann dann nochmals einer fachspezifischen Entscheidungsstelle vorgelegt werden, welche auch Prozesseigner für das weitere Vorgehen wird. Bis zu dieser Entscheidungsstelle ist schon eine starke Vorselektion der Dokumente erfolgt. Die fachspezifische Entscheidungsstelle nimmt eine neuerliche Relevanzbewertung vor, und entscheidet über das weitere Vorgehen. Die neuerliche Relevanzbewertung ersetzt die ursprüngliche dokumentenspezifische Relevanzbewertung; dabei können ohne weiteres auch als hochrelevant bewertete Dokumente als eben doch nicht relevant identifiziert werden.

Dokumente, die unterhalb einer bestimmten Relevanzstufe eingeordnet wurden, werden verworfen; die anderen Dokumente werden archiviert, und, bevorzugt mitsamt der Relevanzbewertung, einem breiten Leserkreis zugänglich gemacht.

Bevorzugt werden die Dokumente in elektronischer Form bereitgestellt und archiviert. Dabei kann ein Dokument in unterschiedlichen Detailstufen abgelegt sein, wobei die entsprechenden Dateien durch symbolische Zeiger, die in der Koordinationstabelle abgelegt sind, miteinander verknüpft sind und /oder Verweisungen aufeinander enthalten. Es ist in diesem Zusammenhang auch sehr vorteilhaft, die Koordinationstabelle in elektronischer Form zu führen. Wie oben beschrieben, kann die Koordinationstabelle eine Vielzahl für den Verfahrensablauf signifikanter Informationen enthalten, und sollte mit Vorteil nach diesen Informationen sortierbar sein. In diesem Sinne stellt eine elektronisch geführte Koordinationstabelle nicht nur eine zweidimensionale Tabelle dar, sondern ist im eigentlichen Sinne eine Datenbank, insbesondere eine relationale Datenbank. Auch muss in der Koordinationstabelle enthaltene Information nicht zwangsläufig direkt in der Koordinationstabelle gespeichert sein, sondern sie kann ohne Weiteres auch in Form von logischen Verweisungen und symbolischen Zeigern auf andere Dateien enthalten sein.

Wenn, wie oben dargelegt, die Dokumente in elektronischer Form auf einem Computersystem zur Verfügung gestellt werden, ist es sinnvoll, dokumentenspezifische Informationen in einem einheitlichen Datenformular in dem Computersystem abzulegen und den Anwendern anzuzeigen. In einem solchen Datenformular können auch unmittelbar dokumentenspezifische Einträge vorgenommen werden. Dabei kann in dem Computersystem die Identität des Eintragenden und dessen Berechtigung zur Vornahme von Einträgen überprüft werden. Diese zusätzlichen Einträge können dann in der Koordinationstabelle erfasst werden. In diesem Sinne stellt das Datenformular eine Ein- und Ausgabeschnittstelle der Koordinationstabelle dar.

Bei der elektronischen Ausführung des Verfahrens ist es weiterhin von Vorteil, wenn wenigstens eine Detailstufe eines jeden Dokumentes elektronisch recherchierbar vorliegt, dergestalt, dass die Dokumente einer Sachrecherche zugänglich sind.

Das Verfahren kann sehr vorteilhaft mit einem elektronischen Postsystem verbunden werden, indem einem Leser beispielsweise durch eine Meldung des elektronischen Postsystems mitgeteilt wird, wenn für ihn ein neues Dokument zur Lese bereitsteht. Ebenso kann das Mahnsystem bei der Annährung an Zeitlimite automatisiert über dieses Postsystem erfolgen, und die Leser können Ihre Bewertung auf diesem Wege an die Koordinationsstelle zurückmelden, wobei die Bewertung unmittelbar in der Koordinationstabelle erfasst wird. Die Ablage in einer elektronisch geführten Koordinationstabelle ermöglicht es, diese Schritte zu automatisieren.

Ein wesentlicher Vorteil der Erfindung ist darin zu sehen, dass aufgrund der parallelen Dokumentenauswertung dem einzelnen Leser mehr Zeit zur ausführlichen Analyse und Bewertung eines potentiell relevanten Dokumentes innerhalb einer gesetzten Frist zur Verfügung steht. Ein weiterer Vorteil der Erfindung ist darin zu sehen, dass, indem in einem ersten Schritt nur Fassungen der Dokumente in einer niedrigen Detailstufe verteilt werden, anhand derer eine erste Vorauswahl erfolgt, die Informationsflut für den einzelnen Leser deutlich eingedämmt wird, was wiederum eine qualitativ hochstehendere Analyse der potentiell relevanten Dokumente ermöglicht. Daneben spart dieses Vorgehen durchaus signifikant Kosten, welche bei der Beschaffung von vollständigen Dokumenten der höchsten Detailstufe entstehen.

Ein weiterer Vorteil des Verfahrens ist darin zu sehen, dass, sofern das Verfahren mit Hilfe eines Computersystems und mit Dokumenten in elektronischer Form durchgeführt wird, der gesamte Prozess leicht zu überwachen und durch geeignete Massnahmen zu steuern ist. Eine wesentliche Anzahl von Prozessschritten kann automatisiert ablaufen, insbesondere auch deshalb, weil der Status in der Koordinationstabelle dokumentiert ist. Zusätzlich können die vorselektierten Dokumente mitsamt Bewertungen und Kommentaren einem grossen Leserkreis einfach zugänglich gemacht werden, was gerade innerhalb grosser Unternehmen einen nicht unerheblichen Mehrwert darstellt. In diesem Zusammenhang können weiterhin auch interne Dokumente einer Organisation, spezifischer, eines Unternehmens, den Lesern zugänglich gemacht werden. So kann beispielsweise durch eine interne Offenlegung prioritätsbegründend hinterlegter Patentanmeldungen ein breiter unternehmensinterner Leserkreis über neueste Entwicklungen informiert werden, bevor die eigentliche Offenlegung einer Anmeldung stattfindet. Dabei ist gegebenenfalls von der Möglichkeit Gebrauch zu machen, den autorisierten Leserkreis dokumentenspezifisch einzuschränken.

Wie bereits angeklungen ist, ist das erfindungsgemässe Verfahren besonders zur Auswertung in elektronischer Form vorliegender Dokumente geeignet, und mit Vorteil auf einem Computer oder einem Computersystem zu implementieren. Es wird daher auch Schutz begehrt für ein Computerprogramm oder ein Computerprogrammsystem zur Durchführung respektive Steuerung eines erfindungsgemässen Verfahrens. Es wird Schutz begehrt für Datenträger auf denen ein solches Computerprogramm oder Programmsystem als Quelltext wie auch als ausführbarer Code gespeichert ist. Dabei ist Datenträger im weitesten Sinne zu verstehen; insbesondere fällt auch ein Bündel aus mehreren Datenträgern darunter. Jedes computerlesbare und/oder beschreibbare Medium kommt hierzu in Frage. Ebenso wäre hierunter auch flüchtiger Speicher, wie RAM-Speicher, zu verstehen, welcher einen solchen Computercode als Quelltext oder in ausführbarer Form enthält. Insbesondere ist hierunter auch der Arbeitsspeicher eines Computers zu verstehen, in welchem ein entsprechendes Computerprogramm geladen ist.

### Kurze Beschreibung der Zeichnung

Die Erfindung wird nachfolgend anhand von in der Zeichnung illustrierten Beispielen näher erläutert. Im Einzelnen zeigen
- Fig. 1 den Informationsfluss zwischen den an einem erfindungsgemässen Verfahren beteiligten Funktionseinheiten;
- Fig. 2 einen Ablaufplan eines erfindungsgemässen Verfahrens;
- Fig. 3 eine schematische Darstellung der Koordinationstabelle.

Die Ausführungsbeispiele dürfen keineswegs in einem einschränkenden Sinne verstanden werden, sondern dienen dem besseren Verständnis der in den Ansprüchen gekennzeichneten Erfindung.

### Weg zur Ausführung der Erfindung

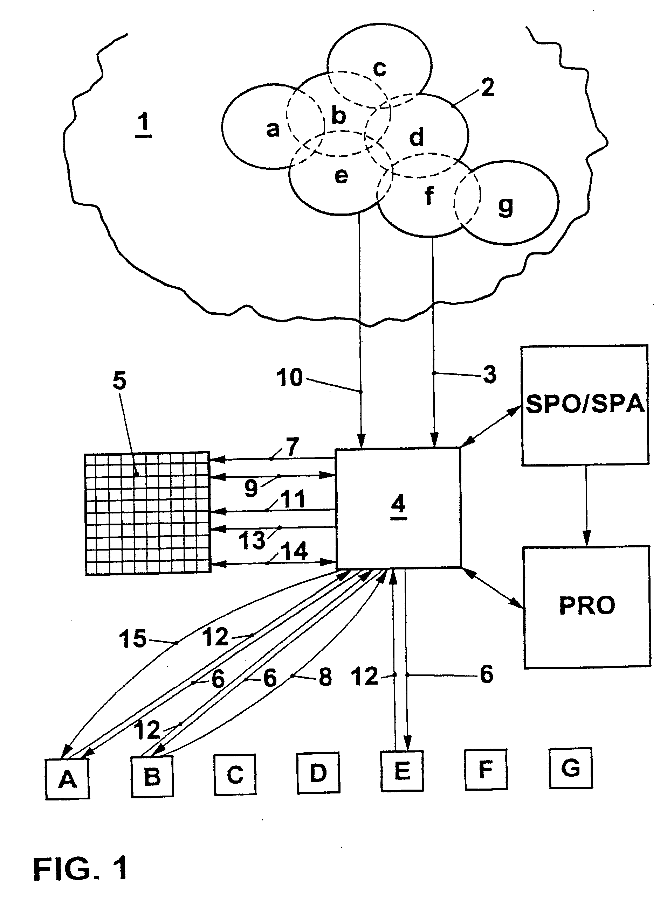

Ein stark schematisiertes Beispiel für den Datenfluss bei der Auswertung eines Dokumentes mittels eines erfindungsgemässen Verfahrens ist in Figur 1 dargestellt. Die Menge mit dem Bezugszeichen 1 repräsentiert beispielsweise die Menge aller in einem bestimmten Zeitraum, zum Beispiel innerhalb der letzten vier Wochen, veröffentlichten Patentschriften und Offenlegungsschriften. Leser A, B, C, D, E, F, G haben sich teilweise überschneidende Interessenprofile a, b, c, d, e, f, g definiert, deren Vereinigungsmenge das Interessenprofil 2 einer Organisation beschreibt. Auszuwerten sind alle Dokumente der Schnittmenge zwischen den Schriften 1 und dem gesamten Interessenprofil 2. In einem ersten Schritt werden die Zusammenfassungen 3 dieser Dokumente, wenn vorhanden mit relevanten Zeichnungen, auf ein Computersystem 4 geladen. Mit einem Dokument werden dabei Informationen geliefert, welchem Interessenprofil es zugeordnet ist. Das Computersystem legt für ein neu geliefertes Dokument einen Datensatz in der Koordinationstabelle 5 an, der unter anderem bibliografische Daten des Dokumentes enthält. Im dargestellten Fall entspricht ein Dokument den Interessenprofilen a, b und e. Das Computersystem 4 löst über ein elektronisches Postsystem den Versand von Benachrichtigungen 6 an die dokumentenspezifischen Leser A, B und E aus. Gleichzeitig erfolgt ein Eintrag 7 in der Koordinationstabelle, dass eine Beurteilung durch diese Leser zu erfolgen hat. Das Dokument steht diesen Lesern nun in einer niedrigen Detailstufe zur Verfügung. Leser B erkennt anhand dieser Information das Dokument als potentiell relevant. Zur besseren Einschätzung fordert er über eine Nachricht 8 das Volltextdokument an. Das Computersystem 4 prüft über einen Dialog 9 mit der Koordinationstabelle, ob dieses Volltextdokument bereits vorhanden ist. Ist dieses nicht vorhanden, so lädt das Computersystem 4 das Dokument 10, und es erfolgt ein entsprechender Eintrag 11 in der Koordinationstabelle, in der Form eines symbolischen Zeigers auf das abgespeicherte Volltextdokument; wenn ein anderer Leser ebenfalls dieses Volltextdokument wünscht, kann es ihm auf seine Anfrage unmittelbar zur Verfügung gestellt werden. Wenn ein dokumentenspezifischer Leser ein Dokument gelesen hat, gibt er eine Rückmeldung 12 an das Computersystem, und es wird ein entsprechender Eintrag 13 in der Koordinationstabelle vorgenommen. Die Rückmeldung und der Eintrag beinhalten eine Relevanzbewertung des Dokumentes durch die dokumentenspezifischen Leser. Zu den Einträgen in der Koordinationstabelle gehören, sofern es sich um terminkritische Dokumente handelt, Rücklauffristen, welche regelmässig durch das Computersystem durch einen Überprüfungsdialog 14 mit der Koordinationstabelle überprüft werden, so lange, bis alle Leser eine Rückmeldung gegeben haben, das heisst, bis in der Koordinationstabelle eine Relevanzbewertung für jeden dokumentenspezifischen Leser vorliegt. Wenn in einer angemessen zu bestimmenden Zeit vor der Zeitlimite kein vollständiger Rücklauf vorliegt, so werden den säumigen Lesern Mahnungen zugeschickt. Hat Leser A nicht fristgerecht eine Bewertung abgegeben, so erhält er eine Erinnerung 15, bis er ebenfalls eine Relevanzbewertung des Dokumentes abgibt. Nach vollständiger Relevanzbewertung wird das Dokument bei hoher Relevanz einer fachspezifischen Entscheidungsstelle PRO zugeleitet. Diese fachspezifische Entscheidungsstelle kann je nach Dokumententyp und Dokumentenrelevanz sehr differenzierte weitere Prozesse einleiten, bei denen ebenfalls die Koordinationstabelle eine zentrale Rolle zur Dokumentation des Prozesses und des Status des Prozesses innehat. Der fachspezifischen Entscheidungsstelle PRO ist eine administrative Entscheidungsstelle SPO/SPA nebengeordnet. Die administrative Entscheidungsstelle SPO/SPA ist befugt, wiederholt, vor der Einleitung von Folgeprozessen, insbesondere vor der Einleitung kostenwirksamer Prozesse, eine neue Relevanzeinstufung von der fachspezifischen Entscheidungsstelle PRO anzufordern, dies insbesondere in Beachtung der Tatsache, dass die Folgeprozesse langfristig angelegt sind, die technischen und wirtschaftlichen Randbedingungen aber, in deren Kontext eine Relevanzeinstufung erfolgt, hochdynamisch sind und stetigen Veränderungen unterliegen. Insbesondere hat in einer Ausführungsform der Erfindung die administrative Entscheidungsstelle SPO/SPA auch die Befugnis, die fachspezifische Entscheidungsstelle PRO festzulegen. Ein weiterer wichtiger Punkt des erfindungsgemässen Verfahrens ist die Ablage der Dokumente in einer Form, in der sowohl die Dokumente selbst wie auch Kommentare und Bewertungen einem breiten Leserkreis zugänglich sind; dabei werden die Dokumente bevorzugt recherchierbar abgelegt, dergestalt, dass die archivierten Dokumente auch einer Sachrecherche zugänglich sind.

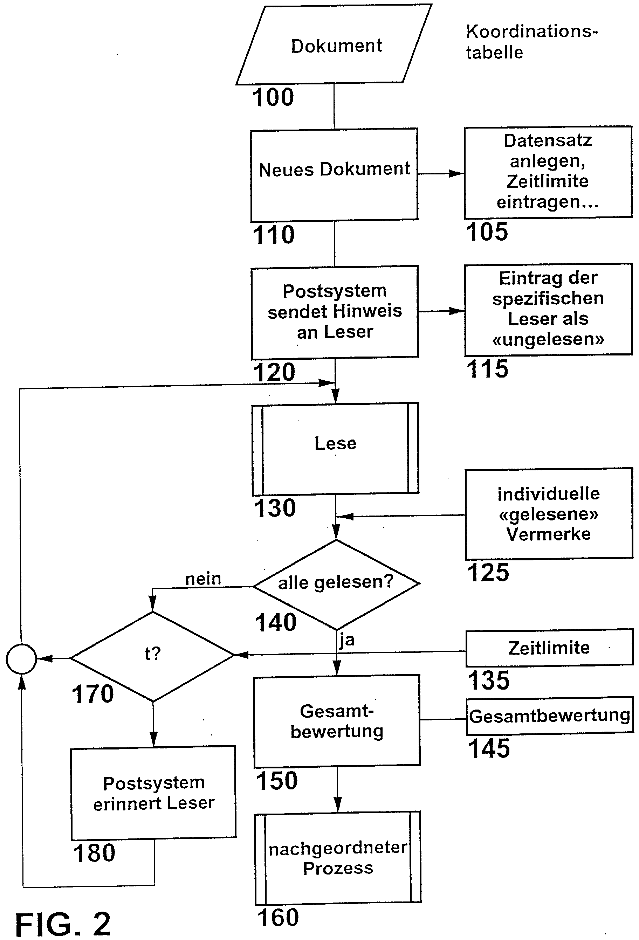

In Fig. 2 ist ein Flussdiagramm eines schematischen Ablaufs dargestellt. Die rechte Spalte gibt die Ereignisse der Koordinationstabelle wieder. Ein erster Funktionsblock 100 liest ein neues Dokument ein. Ein Funktionsblock 110 speichert diesen, und nimmt einen ersten Eintrag 105 in der Koordinationstabelle vor. Dabei wird ein dem neuen Dokument zugeordneter Datensatz angelegt, und es werden bibliografische Daten, ein Zeiger auf das Dokument, sowie weitere relevante Daten, wie eine Frist zum Abschluss der Dokumentenauswertung, eingetragen. In einem nächsten Funktionsblock 120 versendet ein elektronisches Postsystem automatisch Hinweise auf das neue Dokument an die dokumentenspezifischen Leser. Insbesondere an dieser Stelle kann das erfindungsgemässe Verfahren vorteilhaft in ein bestehendes elektronisches Postsystem, beispielsweise auf der Basis von Lotus Notes, eingebunden werden. Gleichzeitig erfolgt ein Eintrag 115 der spezifischen Leser als "ungelesen" in der Koordinationstabelle. In einem nächsten Schritt beginnt der Leseprozess 130, welcher für sich ein in diesem Rahmen nicht weiter aufgeschlüsselter Unterprozess ist. In regelmässigen Zeitabständen, beispielsweise täglich, werden die individuellen "gelesen"-Einträge 125 der Leser in der Koordinationstabelle abgefragt, und ein einem Funktionsblock 140 wird geprüft, ob alle dokumentenspezifischen Leser bereits eine Bewertung vorgenommen und in der Koordinationstabelle eingetragen haben. Wenn dies nicht der Fall ist, wird in einem nächsten Schritt 170 überprüft, ob eine dokumentenspezifische Rücklaufffrist, welche als Zeitlimite 135 in der Koordinationstabelle abgelegt ist, bereits erreicht oder überschritten ist. Falls dies der Fall ist, werden säumige Leser über das elektronische Postsystem erinnert, und der Leseprozess fortgeführt, bis die Abfrage 140 positiv beantwortet wird. Danach wird im Verfahrensschritt 150 die Gesamtbewertung vorgenommen und die resultierende dokumentenspezifische Relevanzbewertung 145 wird in der Koordinationstabelle abgelegt. Abschliessend wird, abhängig von der erfolgten Relevanzeinstufung, ein nachgeordneter Prozess 160 eingeleitet.

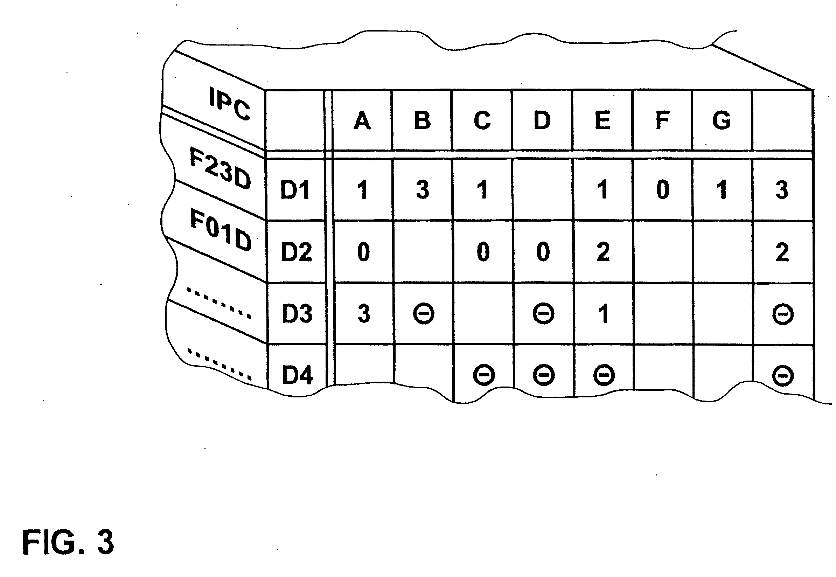

Die Koordinationstabelle ist, wie den obigen Ausführungen implizit zu entnehmen ist, keineswegs auf eine zweidimensionale Tabelle beschränkt. Ein schematisches Beispiel für eine Koordinationstabelle ist in Figur 3 dargestellt. In der Blattebene sind auf einer vertikalen Achse Dokumente D1, D2, D3, D4, ... eingetragen; die Spalten sind den Lesern zugeordnet, und in der letzten Spalte ist die Gesamtbewertung des Dokumentes vermerkt. Wenn ein Dokument nicht dem Interessenprofil eines Lesers zugeordnet ist, bleibt die entsprechende Zelle der Tabelle leer. Ein "-" bedeutet einen "nicht gelesen"respektive "noch zu lesen" - Vermerk. Dieser wird bei der Beurteilung durch die Leser durch deren Bewertungen ersetzt. Die beispielhaft wiedergegebene Tabelle ist so zu lesen, dass die dokumentenspezifischen Leser von Dokument D1 A, B, C, E, F und G sind; alle haben Ihre Bewertung abgegeben, und es resultiert die Gesamtbewertung 3. Die dokumentenspezifischen Leser von D3 sind A, B, D, und E; A und E haben ihre Bewertung abgegeben, die Bewertung durch B und D steht noch aus, daher konnte auch keine Gesamtbewertung vorgenommen werden. Auf einer in die Blattebene hineinreichenden Achse sind andere Angaben wie die IPC-Einordnung aufgeführt. Andere wichtige Angaben sind zum Beispiel der Patentinhaber, das Veröffentlichungsdatum, oder ein Zeiger auf die Zusammenfassung und den Volltext des Dokumentes. Die Koordinationstabelle ist mit Vorteil eine mehrdimensionale Datenbank, was es ermöglicht, die enthaltenen Daten ohne Weiteres in Abhängigkeit einer Vielzahl von Angaben aufzuschlüsseln und auszuwerten.

Die angegebenen Ausführungsbeispiele sind rein instruktiv und in keinem Falle einschränkend zu verstehen, und können die Möglichkeiten des in den Ansprüchen gekennzeichneten Verfahrens nur teilweise beleuchten; dem interessierten Fachmann eröffnen sich in diesem Lichte aber ohne weiteres eine Vielzahl möglicher Ausführungsformen der in den Ansprüchen gekennzeichneten Erfindung.

### Bezugszeichenliste

- 1: Menge der zur insgesamt Verfügung stehenden Information
- 2: Interessenprofil aller Leser A ... G
- 3: Dokumentenzusammenfassungen
- 4: Computersystem
- 5: Koordinationstabelle
- 6: Benachrichtigung
- 7: Eintrag
- 8: Nachricht, Anforderung
- 9: Dialog
- 10: Dokument
- 11: Eintrag
- 12: Rückmeldung, Quittierung
- 13: Eintrag, Quittierungseintrag, "gelesen"-Vermerk
- 14: Überprüfungsdialog
- 15: Erinnerung
- A, ..., G: Leser
- a, ..., g: individuelle Interessenprofile der Leser A, ..., G
- PRO: fachspezifische Entscheidungsstelle
- SPO/SPA: administrative Entscheidungsstelle

## Patentansprüche

1. Verfahren zur nichtlinearen Dokumentenauswertung, mit den folgenden Schritten:
- Dokumente (a, ..., g) werden dokumentenspezifischen Lesern (A, ... ,G) zugeordnet;
- die Dokumente werden allen dokumentenspezifischen Lesern (A, G) zeitgleich zur Verfügung gestellt;
- es erfolgt ein Vermerk (7) in einer Koordinationstabelle (5), welches Dokument welchem Leser zur Verfügung gestellt wurde;
- wenn ein Leser ein Dokument gelesen und ausgewertet hat, erfolgt ein entsprechender Vermerk (13) in der Koordinationstabelle;
- wenn alle dokumentenspezifischen Leser ein Dokument gelesen und ausgewertet haben, erfolgt ein entsprechender Vermerk in der Koordinationstabelle.

2. Verfahren nach Anspruch 1, wobei die Dokumente zunächst in einer niedrigen Detailstufe (3) zur Verfügung gestellt werden, und einem Leser auf Anforderung eine höhere Detailstufe (10) eines Dokumentes zur Verfügung gestellt wird.

3. Verfahren nach einem der vorstehenden Ansprüche, wobei dokumentenspezifische Zeitlimite gesetzt werden, und ein dokumentenspezifischer Leser in einer definierten Zeitspanne vor Erreichen der Zeitlimite eine Erinnerung (15) erhält.

4. Verfahren nach einem der vorstehenden Ansprüche, wobei die dokumentenspezifischen Leser eine Relevanzbewertung vornehmen, die in der Koordinationstabelle erfasst wird, und wobei aus der höchsten erfolgten Relevanzbewertung eine dokumentenspezifische Relevanz gebildet wird.

5. Verfahren nach Anspruch 4, wobei die Dokumente ab einer bestimmten festzulegenden Relevanzbewertung einer fachspezifischen Entscheidungsstelle (PRO) zugeleitet werden, und wobei durch diese Entscheidungsstelle eine neuerliche Relevanzbewertung erfolgt, und ausgehend von dieser neuen Relevanzbewertung bedarfsgerecht ein Folgeprozess eingeleitet wird.

6. Verfahren nach Anspruch 5, wobei durch die neuerliche Relevanzbewertung die ursprüngliche dokumentenspezifische Relevanzbewertung ersetzt wird.

7. Verfahren nach einem der Ansprüche 5 oder 6, wobei eine der fachspezifischen Entscheidungsstelle (PRO) nebengeordnete administrative Entscheidungsstelle (SPO/SPA) vor Einleitung eines Folgeprozesses, insbesondere vor Einleitung eines kostenwirksamen Folgeprozesses, eine neue Relevanzbewertung von der fachspezifischen Entscheidungsstelle (PRO) anfordert.

8. Verfahren nach einem der Ansprüche 4 bis 7, wobei die Dokumente entsprechend der dokumentenspezifischen Relevanz verworfen oder in relevanzbezogenen Archiven abgelegt werden.

9. Verfahren nach Anspruch 8, wobei die abgelegten Dokumente, bevorzugt mitsamt der Relevanzbewertung, einem breiten Leserkreis zugänglich gemacht werden.

10. Verfahren nach Anspruch 9, wobei weiterhin auch organisationsinterne Dokumente, insbesondere prioritätsbegründend hinterlegte Patentanmeldungen, zugänglich gemacht werden.

11. Verfahren nach einem der vorstehenden Ansprüche, wobei die Dokumente in elektronischer Form bereitgestellt und gegebenenfalls in den relevanzbezogenen Archiven abgelegt werden werden.

12. Verfahren nach Anspruch 11, wobei die Dokumente in verschiedenen Detailstufen abgelegt werden, welche durch symbolische Zeiger miteinander verknüpft und/oder mit gegenseitigen Verweisungen versehen werden.

13. Verfahren nach einem der vorstehenden Ansprüche, wobei dokumentenspezifische Informationen in einem einheitlichen Datenformular auf einem Computersystem abgelegt und angezeigt werden.

14. Verfahren nach Anspruch 13, wobei dokumentenspezifische Einträge unmittelbar in dem Datenformular vorgenommen werden.

15. Verfahren nach Anspruch 14, wobei die Identität des Eintragenden und dessen Berechtigung zur Vornahme von Einträgen in bestimmten Formularfeldern überprüft werden.

16. Verfahren nach einem der Ansprüche 14 oder 15, wobei die Einträge in der Koordinationstabelle erfasst werden.

17. Verfahren nach einem der Ansprüche 11 bis 16, **dadurch gekennzeichnet, dass** wenigstens eine Detailstufe eines Dokumentes recherchierbar vorliegt.

18. Verfahren nach einem der vorstehenden Ansprüche, welches in ein elektronisches Postsystem integriert ist

19. Verfahren nach einem der vorstehenden Ansprüche welches auf einem verteilten heterogenen Computersystem implementiert ist.

20. Computerprogramm oder Programmpaket, welches einen Computer zur Durchführung respektive zur Steuerung eines Verfahrens gemäss einem der vorstehenden Ansprüche veranlasst.

21. Datenträger, auf welchem ein Computerprogramm oder Computerprogrammpaket gemäss Anspruch 20 als Quelltext und/oder als ausführbarer Computercode gespeichert ist.
